# EUROPÄISCHE PATENTANMELDUNG

(11) **EP 2 228 564 A1**
(43) Veröffentlichungstag der Anmeldung: **15.09.2010**
(21) Anmeldenummer: 10155746.0
(22) Anmeldetag: 08.03.2010
(51) Int. Cl.: F16H 55/18

(54) **Scherenzahnrad mit einem an einem drehmomentübertragenden Hauptzahnrad elastisch abgestützten Hilfszahnrad**

(30) Priorität: 09.03.2009 DE 102009001403
(71) Anmelder: Metallumform Gmbh, 34346 Hann.Münden (DE); WEGU GmbH & Co. KG, 34123 Kassel (DE)
(72) Erfinder: Krause, Ralf, 34308, Bad Emstal (DE); Mißling, Wulf, 37574, Einbeck (DE); Winkler, Jürgen, 34121, Kassel (DE)
(74) Vertreter: Rehberg, Bernhard Frank

(57) **Zusammenfassung**

Bei einem Scherenzahnrad (1) mit einem Drehmomente übertragenden Hauptzahnrad (2) und einem in einer Grundstellung gegenüber dem Hauptzahnrad (2) in Umfangsrichtung versetzten und an dem Hauptzahnrad (2) in Umfangsrichtung über Federelemente (8) aus Polymerwerkstoff (9) elastisch abgestützten Hilfszahnrad (4) werden die Federelemente (8) bei einer Relativverdrehung des Hilfszahnrads (4) gegenüber dem Hauptzahnrad (2) aus seiner versetzten Grundstellung um eine gemeinsame Drehachse (5) der beiden Zahnräder (2, 4) auf Schub beansprucht, sind die Federelemente (8) zwischen dem Hauptzahnrad (2) und dem Hilfszahnrad (4) in Richtung der gemeinsamen Drehachse (5) auf Druck vorgespannt und sind die Federelemente (8) durch einen Ring (12) aus Polymerwerkstoff (9) miteinander verbunden.

## Beschreibung

### TECHNISCHES GEBIET DER ERFINDUNG

Die Erfindung betrifft ein Scherenzahnrad mit den Merkmalen des Oberbegriffs des unabhängigen Patentanspruchs 1.

Scherenzahnräder, auch als Spielausgleichszahnräder oder englisch anti Backslash Gears bezeichnet, werden zum Übertragen von schwankenden oder pulsierenden Drehmomenten eingesetzt, um eine freie Relativbewegung zweier kämmender Zahnräder aufgrund der Drehmomentschwankungen oder -pulsationen zu verhindern. Eine derartige freie Relativbewegung ist mit einer Geräuschentwicklung, dem sogenannten Getrieberasseln oder Zahnflankenschlagen und auch einer erhöhten mechanischen Belastung sowie einer dadurch verkürzten Lebensdauer der Zahnräder verbunden. Bei einem Scherenzahnrad werden die Zähne eines kämmenden Zahnrads zwischen den Zähnen des Hauptzahnrads und den Zähnen des in seiner Grundstellung gegenüber dem Hauptzahnrad in Umfangsrichtung versetzten Hilfszahnrands spielfrei geführt. Auftretende Drehschwingungen werden innerhalb des Spiels zwischen dem Hauptzahnrad und dem kämmenden Zahnrad durch Relativbewegungen des Hilfszahnrads kompensiert und gedämpft.

### STAND DER TECHNIK

Ein Scherenzahnrad mit den Merkmalen des Oberbegriffs des unabhängigen Patentanspruchs 1 ist aus der JP 2001 - 132823 A (Abstract) bekannt. Die elastischen Elemente ersetzen metallische Federn und verhindern so Reibung zwischen den Zahnrädern und diesen metallischen Federn.

Ein Scherenzahnrad mit den Merkmalen des Oberbegriffs des unabhängigen Patentanspruchs 1, außer dass die Federelemente zwischen dem Hauptzahnrad und dem Hilfszahnrad in Richtung der gemeinsamen Drehachse nicht auf Druck vorgespannt ist aus der GB 560 469 A bekannt. Hier ist ein Ring oder sind mehrere Einzelelemente aus Gummi sowohl an das Hauptzahnrad als auch an das Hilfszahnrad anvulkanisiert, und zwar an in Richtung ihrer gemeinsamen Drehachse einander gegenüberliegende Flächen der beiden Zahnräder. Dabei liegen die Federelemente zwischen den beiden Zahnrädern soweit frei, dass sie bei Relativverdrehungen des Hilfszahnrads gegenüber dem Hauptzahnrad keiner Gefahr eines abgeschert Werdens unterworfen sind, sondern nur auf Schub beansprucht werden. Außerdem halten die an beide Zahnräder anvulkanisierten Federelemente das Hilfszahnrad so an dem Hauptzahnrad, dass die beiden Zahnräder in Richtung ihrer gemeinsamen Drehachse aneinander gedrückt werden. Entsprechend stehen die Federelemente in Richtung der gemeinsamen Drehachse unter einer Zugvorspannung. In radialer Richtung ist das Hilfszahnrad an einem Radialbund des Hauptzahnrads abgestützt.

Als nachteilig bei dem bekannten Scherenzahnrad erweist sich, dass eine unvermeidbare Setzung oder Alterung der Federelemente aus Elastomerwerkstoff zu einer starken Veränderung der elastischen Abstützung des Hilfszahnrads an dem Hauptzahnrad führt, und sich auch die Kraft, mit der das Hilfszahnrad in Richtung der gemeinsamen Drehachse an das Hauptzahnrad angedrückt wird, sowie die daraus resultierende Reibung zwischen den Zahnrädern deutlich zurückgeht.

Aus der DE 100 58 482 B4 ist ein Scherenzahnrad bekannt, bei dem das Hilfszahnrad in radialer Richtung direkt sowie über Köpfe von Befestigungsschrauben in axialer Richtung der gemeinsamen Drehachse indirekt an dem Hilfszahnrad geführt ist. In Umfangsrichtung stützt sich das Hilfszahnrad über elastische Buchsen aus Elastomerwerkstoff an parallel zu der gemeinsamen Drehachse verlaufenden, starr mit dem Hauptzahnrad verbundenen Bolzen ab. Hierdurch ist nur eine vergleichsweise harte elastische Abstützung des Hilfszahnrands an dem Hauptzahnrad zu realisieren. Zudem machen sich auch hier schnell Alterungs- und Setzungserscheinungen des Elastomerwerkstoffs bemerkbar.

Bei einem aus der DE 38 03 700 A1 bekannten Scherenzahnrad sind das Hilfszahnrad und das Hauptzahnrad durch parallel zu der gemeinsamen Drehachse verlaufende bolzenförmige Verbindungselemente aus Elastomerwerkstoff miteinander verbunden. Um dabei die Scherbelastung der Verbindungselemente bei einer Relativbewegung des Hilfszahnrads gegenüber dem Hauptzahnrad zu reduzieren, können die Ausnehmungen in den beiden Zahnrädern an ihrer Schnittstelle aufgeweitet sein und einen entsprechenden aufgeweiteten Übergangsbereich der Verbindungselemente aufnehmen. Die Nachteile dieses bekannten Scherenzahnrads sind grundsätzlich dieselben wie bei dem zuvor beschriebenen Stand der Technik.

Federelemente altern besonders schnell bei erhöhter Temperatur und unter chemischer Belastung, wie beispielsweise durch Schmieröle.

Aus der DE 198 20 638 A1 ist ein Scherenzahnrad bekannt, bei dem das Hilfszahnrad über Schraubenfedern an dem Hauptzahnrad abgestützt ist. Dabei können die Schraubenfedern parallel zu der gemeinsamen Drehachse der beiden Zahnräder ausgerichtet sein, wenn zwischen dem Hilfszahnrad und dem Hauptzahnrad eine Gewindespindel wirkt, so dass jede Relativbewegung des Hilfszahnrads gegenüber dem Hauptzahnrad in Umfangsrichtung um die gemeinsame Drehachse auch zu einer axialen Abstandsveränderung der beiden Zahnräder führt, durch die die Schraubenfedern zusammengedrückt werden. Dieses bekannte Scherenzahnrad ist äußerst aufwändig in seiner Herstellung und verfügt zudem nur über eine geringe Dämpfung der Relativbewegung des Hilfszahnrads gegenüber dem Hauptzahnrad.

### AUFGABE DER ERFINDUNG

Der Erfindung liegt die Aufgabe zugrunde, ein Scherenzahnrad aufzuzeigen, das aufgrund der Abstützung des Hilfszahnrads an dem Hauptzahnrad über Federelemente aus Polymerwerkstoff eine gute Dämpfung aufweist, das seine Eigenschaften nicht schnell durch Setzung oder Alterung seiner Federelemente ändert und das dennoch günstige Weise herstellbar ist.

### LÖSUNG

Die Aufgabe der Erfindung wird durch ein Scherenzahnrad mit den Merkmalen des unabhängigen Patentanspruchs 1 gelöst. Bevorzugte Ausführungsformen des neuen Scherenzahnrads sind in den abhängigen Patentansprüchen 2 bis 14 beschrieben.

### BESCHREIBUNG DER ERFINDUNG

Bei dem neuen Scherenzahnrad sind die Federelemente aus Polymerwerkstoff zwischen dem Hauptzahnrad und dem Hilfszahnrad in Richtung der gemeinsamen Drehachse auf Druck vorgespannt. Diese Druckvorspannung führt in der Verwendung des neuen Scherenzahnrads reinen Druck-/Schubbelastungen der Federelemente aus Polymerwerkstoff, unter denen der Polymerwerkstoff besonders standfest ist und besonders geringe Alterungseffekte zeigt. Die Druckvorspannung auf die Federelemente aus Polymerwerkstoff verhindert insbesondere jegliche Zugbeanspruchung des Polymerwerkstoffs, unter der er schnell altert. Zudem kompensiert die Druckvorspannung auf die Federelemente die Effekte deren Setzung oder Alterung im Hinblick auf die elastische Abstützung des Hilfszahnrads an dem Hauptzahnrad in Umfangsrichtung. Durch die Druckvorspannung kann zudem die Härte der elastischen Abstützung des Hilfszahnrads an dem Hauptzahnrad in Umfangsrichtung eingestellt werden. Insbesondere kann trotz vergleichsweise großvolumiger und damit durch die Relativbewegungen des Hilfszahnrads gegenüber dem Hauptzahnrad nur minimal beanspruchter und in der Folge eine hohe Standzeit aufweisender Federelemente aus Polymerwerkstoff eine vergleichsweise steife Abstützung des Hilfszahnrads an dem Hauptzahnrad eingestellt werden.

Die Abstützung des Hilfszahnrads in Richtung der gemeinsamen Drehachse und radial dazu kann direkt an dem Hauptzahnrad erfolgen. Vorzugsweise erfolgt sie jedoch an einem starr mit dem Hauptzahnrad verbundenen Lagerelement. Durch die starre Verbindung des Lagerelements mit dem Hauptzahnrad wird die Druckvorspannung auf die Federelemente zwischen dem Hauptzahnrad und dem Hilfszahnrad aufgebracht.

Konkret kann es sich bei dem Lagerelement um eine in das Hauptzahnrad eingepresste Nabe handeln. Zusätzlich zu dem Kraft- und Reibschluss kann die Nabe auch stoffschlüssig mit dem Hauptzahnrad verbunden werden, beispielsweise durch Schweißen.

Die Nabe, die das Hauptzahnrad und das Hilfszahnrad trägt, kann mindestens eine radial und axial zu der gemeinsamen Drehachse ausgerichtete Drehmomentübertragungsfläche aufweisen, um das von einem kämmenden Zahnrad auf das Hauptzahnrad übertragene Drehmoment auf eine Welle, auf der die Nabe angeordnet ist, zu übertragen.

Die Federelemente können auch bei dem neuen Scherenzahnrad an beide Zahnräder fest angebunden sein. Umgekehrt können sie an beiden Zahnrädern endseitig durch Formschluss abgestützt sein. Bevorzugt ist es jedoch, wenn die Federelemente an eines der Zahnräder fest angebunden und an dem anderen der Zahnräder formschlüssig abgestützt sind. Die feste Anbindung an dem einen der Zahnräder kann durch Anvulkanisieren bewirkt sein, worunter hier allgemein die Ausbildung einer chemischen Verbindung zwischen dem Polymerwerkstoff und dem Material des Zahnrads, in der Regel, einem Metall, zu verstehen ist. Üblicherweise ist der bei dem neuen Scherenzahnrad zum Einsatz kommende Polymerwerkstoff ein Elastomerwerkstoff, für den das Anvulkanisieren grundsätzlich bekannt ist.

Besonders günstig ist es bei dem neuen Scherenzahnrad, dass die Federelemente durch einen Ring aus Polymerwerkstoff miteinander verbunden sind. Ein solcher Ring hat auch Vorteile, wenn die Federelemente durch Formschluss an beiden Zahnrädern abgestützt sind, weil sie dann mit Hilfe des Rings gemeinsam zwischen die beiden Zahnräder eingesetzt werden können, bevor diese durch das Lagerelement miteinander verbunden werden. Bei an eines der Zahnräder anvulkanisierten Federelementen vergrößert der Ring die Fläche der Gummi-MetallVerbindung der Federelemente zu dem Zahnrad, an das sie anvulkanisiert sind.

Besonders bevorzugt ist es bei dem neuen Scherenzahnrad, wenn die Federelemente an das Hauptzahnrad anvulkanisiert sind, während die freien Enden der Federelemente formschlüssig aufnehmende Vertiefungen in das Hilfszahnrad eingeprägt sind. Ein derartiges Einprägen ist bei dem Hilfszahnrad eher möglich, weil dieses in aller Regel die geringere axiale Wandstärke aufweist, da es nicht das Hauptdrehmoment übertragen muss.

Bei dem neuen Scherenzahnrad kann zwischen dem Hauptzahnrad und dem Hilfszahnrad eine reibungserhöhende Oberflächenbeschichtung wirksam sein, um die Dämpfung zwischen dem Hauptzahnrad und dem Hilfszahnrad zusätzlich zu den inhärenten Dämpfungseigenschaften des Polymerwerkstoffs zu erhöhen. Aneinander reibende Flächen zwischen den beiden Zahnrädern bzw. einem zusätzlichen, sich starr an dem Hauptzahnrad abstützenden Lagerelement für das Hilfszahnrad ergeben sich zwangsläufig infolge der Aufbringung der Druckvorspannung auf die Federelemente. Eine reibungserhöhende Oberflächenbeschichtung kann wie die Federelemente aus Polymerwerkstoff bestehen.

Trotz der zwangsläufig vorhandenen Reibungsflächen zwischen dem Hauptzahnrad und dem Hilfszahnrad ist es aber bei dem neuen Scherenzahnrad bevorzugt, wenn in Richtung der gemeinsamen Drehachse einander gegenüberliegende Flächen am Außenumfang der Zahnräder voneinander beabstandet sind. Das heißt, die Zähne der beiden Zahnräder reiben seitlich vorzugsweise nicht aneinander. Hierdurch wird die Gefahr vermieden, dass das Hilfszahnrad seine Beweglichkeit gegenüber dem Hauptzahnrad verliert, indem es zwischen seinen Abstützungen in Richtung der gemeinsamen Drehachse an dem Hauptzahnrad festklemmt.

Auch bei dem neuen Scherenzahnrad ist es bevorzugt, wenn die Federelemente über ihre überwiegende Erstreckung längs der gemeinsamen Drehachse frei liegen, um jede Scherbeanspruchung der Federelemente zu vermeiden, obwohl die Gefahr der Scherbeanspruchung durch die Druckvorspannung auf die Federelemente bereits grundsätzlich reduziert ist.

Mit dem neuen Scherenzahnrad sind die Grundvoraussetzungen dafür geschaffen, ein Scherenzahnrad, bei dem das Hilfszahnrad über Federelemente aus Polymerwerkstoff gegenüber dem Hauptzahnrad abgestützt ist, auch unter widrigen Umgebungsbedingungen einzusetzen, die grundsätzlich die Setzung und Alterung von Federelementen aus Polymerwerkstoff beschleunigen. Hierzu zählen warme Umgebungen, in denen das Scherenzahnrad ölgeschmiert ist. Es versteht sich aber, dass unter diesen Randbedingungen der Polymerwerkstoff der Federelemente besonders auszuwählen ist. Er sollte soweit möglich ölwarmfest sein. Diese Eigenschaft weisen insbesondere AEM- oder FPM-(Fluorinated Propylene Monomer)-Kautschuke auf.

Bei dem neuen Scherenzahnrad können den Federelementen aus dem Polymerwerkstoff zusätzliche Metallfedern zwischen dem Hauptzahnrad und dem Hilfszahnrad parallel geschaltet sein. Hierbei kann es sich um jedwede Metallfedern, typischerweise aus Federstahl handeln. Besonders bevorzugt ist es jedoch, wenn die Metallfedern zumindest teilweise, vorzugsweise vollständig in den Polymerwerkstoff der Federelemente eingebettet sind. Auf diese Weise wird eine Dämpfung von Eigenschwingungen der Metallfedern bewirkt. Bei einer solchen Ausführungsform des neuen Scherenzahnrads können die Metallfedern auch als metallene Verstärkung der Federelemente aus Polymerwerkstoff angesehen werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand eines konkreten Ausführungsbeispiels unter Bezugnahme auf die beigefügten Figuren näher erläutert und beschrieben.
- **Fig. 1**: ist eine Explosionszeichnung des neuen Scherenzahnrads.
- **Fig. 2**: ist eine perspektivische Ansicht des neuen Scherenzahnrads.
- **Fig. 3**: ist eine Seitenansicht des neuen Scherenzahnrads.
- **Fig. 4**: ist ein Schnitt durch das neue Scherenzahnrad längs dessen Drehachse.

### FIGURENBESCHREIBUNG

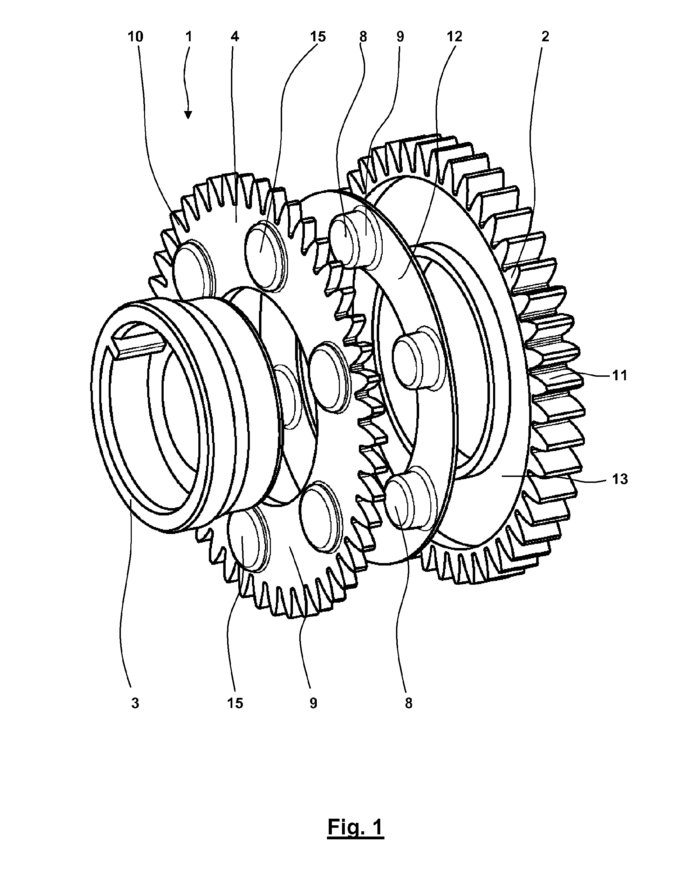

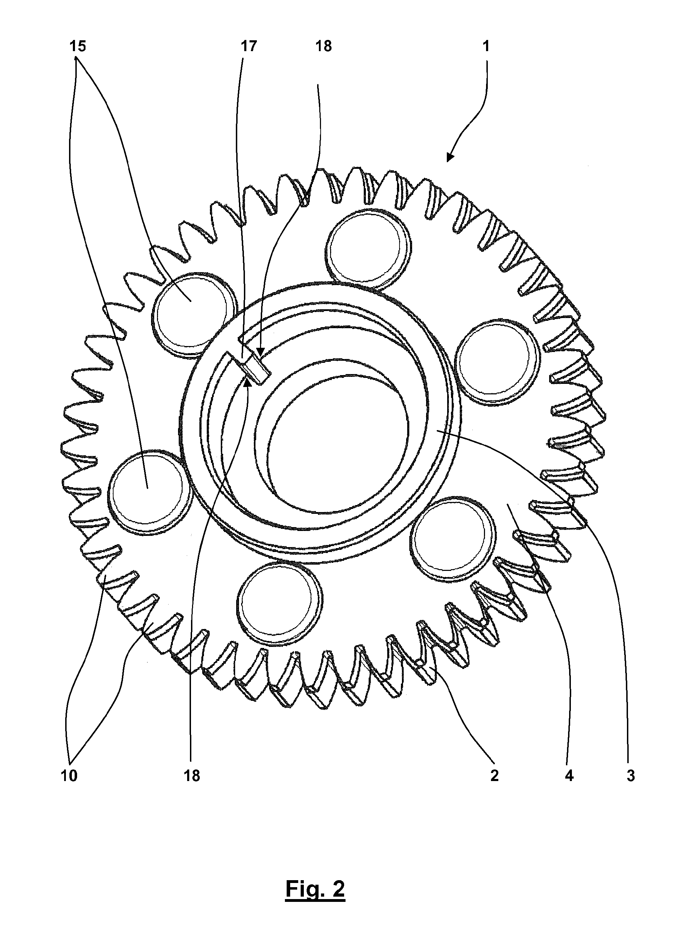

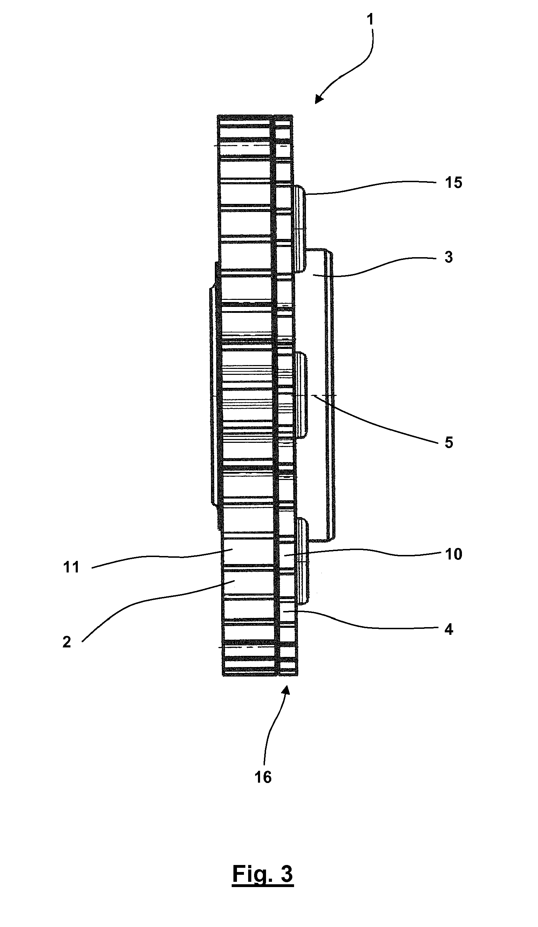

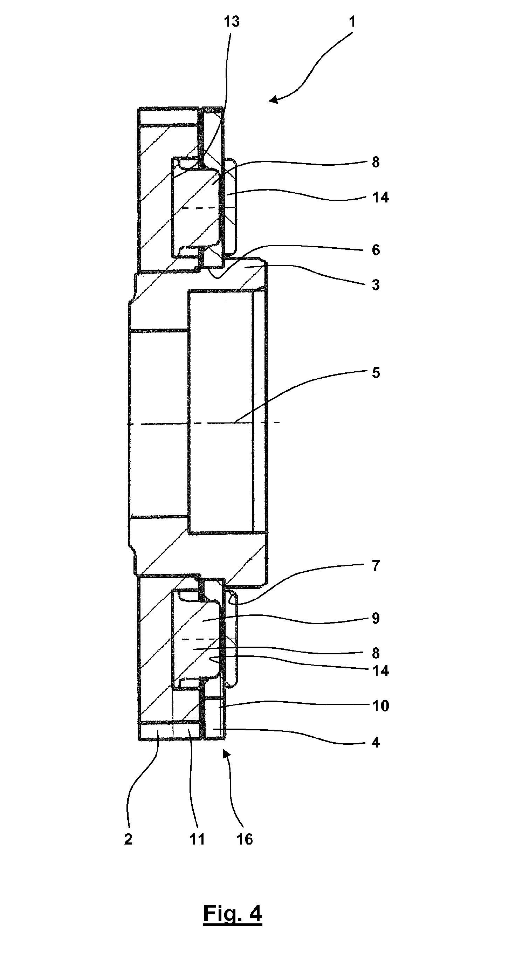

Das in den **Fig. 1 bis 4** gezeigte Scherenzahnrad 1 weist ein Hauptzahnrad 2 auf, das drehfest auf einer Nabe 3 angeordnet ist. Die Nabe 3 ist mit dem Hauptzahnrad 2 kraft- und reibschlüssig verpresst und dient zugleich zur drehbaren Lagerung eines Hilfszahnrads 4 um eine Drehachse 5 des gesamten Scherenzahnrads 1. Dabei stützt die Nabe 3 das Hilfszahnrad 4 gegenüber dem Hauptzahnrad 2 sowohl in radialer Richtung zu der Drehachse 5 als auch einseitig in Richtung der Drehachse 5 über Führungsflächen 6 und 7 ab. Gleichzeitig sind zwischen dem Hilfszahnrad 4 und dem Hauptzahnrad 2 Federelemente 8 aus Polymerwerkstoff 9 vorgesehen. Diese Federelemente erstrecken sich parallel zu der Drehachse 5 und sind in dieser Richtung zwischen dem Hilfszahnrad 4 und dem Hauptzahnrad 2 auf Druck vorgespannt, der über die Nabe 3 abgestützt wird. Die Federelemente 8 definieren eine Grundstellung des Hilfszahnrads 4 gegenüber dem Hauptzahnrad 2, indem die Zähne 10 des Hilfszahnrads 2 in Umfangsrichtung um die Drehachse 5 gegenüber den Zähnen 11 des Hauptzahnrads 2 versetzt angeordnet sind, wie dies insbesondere aus Fig. 3 ersichtlich ist. Bei einer Auslenkung des Hilfszahnrads 4 aus seiner Grundstellung gegenüber dem Hauptzahnrad 2 werden die Federelemente 8 auf Schub beansprucht und stellen eine elastische Rückstellkraft auf das Hilfszahnrad 4 zurück in seine Grundstellung bereit. Gleichzeitig wird aufgrund der inhärenten Eigenschaften des Polymerwerkstoffs 9 die Relativbewegung des Hilfszahnrads 4 gegenüber dem Hauptzahnrad 2 gedämpft. Zusätzliche Dämpfung erfährt diese Relativbewegung über die Reibung des Hilfszahnrads 4 an den Führungsflächen 6 und 7. In Umfangsrichtung um die Drehachse 5 ist das Hilfszahnrad 4 zwar elastisch an dem Hauptzahnrad 2 abgestützt. Seine Relativbewegung ist aber nicht durch irgendwelche Anschläge begrenzt. Diese sind auch nicht nötig, da ein das Scherenzahnrad 1 kämmendes Zahnrad die beiden Zahnräder 2 und 4 nur sehr begrenzt relativ zueinander bewegt, selbst wenn einer Drehbewegung dieses kämmenden Zahnrads starke Drehschwingungen überlagert sind. Die Lage der Federelemente 8 gegenüber dem Hauptzahnrad 2 ist dadurch definiert, dass die Federelemente 8 einschließlich eines sie verbindenden Rings 12 aus dem Polymerwerkstoff 9 an eine um die Drehachse 5 herum kanalförmig verlaufende Kontaktfläche 13 des Hauptzahnrads 2 anvulkanisiert sind. Ein ihren gegenüberliegenden freien Enden sind die Federelemente 8 in Vertiefungen 14 formschlüssig geführt, die in das Hilfszahnrad 4 eingeprägt sind und auf dessen Außenseite als Ausprägungen 15 zu erkennen sind. Dabei sind die Federelemente 8 tatsächlich nur an ihren äußeren Enden formschlüssig in dem Hilfszahnrad 4 geführt und liegen ansonsten über ihre gesamte Länge frei, damit keine Gefahr eines Abscherens der Federelemente 9 besteht. Das Hilfszahnrad 4 ist so auf der einen Seite in Richtung der Drehachse 5 starr über die Nabe 3 und auf der anderen Seite elastisch über die Federelemente 8 an dem Hauptzahnrad 2 abgestützt, wobei zwischen den Zähnen 10 des Hilfszahnrads 4 und den Zähnen 11 des Hauptzahnrads 2 ein seitlicher Spalt 16 verbleibt. Die Druckvorspannung auf die Federelemente 8 verhindert jede Zugbelastung des Polymerwerkstoffs 9 und reduziert während der Lebensdauer des Scherenzahnrads 1 die praktische Auswirkung von Alterung und Setzung der Federelemente 8. An der Nabe 3 ist ein Drehmomentübertragungselement 17 mit radial und axial zu der gemeinsamen Drehachse 5 ausgerichteten Drehmomentübertragungsflächen 18 vorgesehen, das bei der Verwendung des Scherenzahnrads 1 in eine entsprechende Ausnehmung einer Welle eingreift, auf der das Scherenzahnrad 1 drehfest angeordnet wird.

### BEZUGSZEICHENLISTE

- 1: Scherenzahnrad
- 2: Hauptzahnrad
- 3: Nabe
- 4: Hilfszahnrad
- 5: Drehachse
- 6: Führungsfläche
- 7: Führungsfläche
- 8: Federelement
- 9: Polymerwerkstoff
- 10: Zahn
- 11: Zahn
- 12: Ring
- 13: Anbindungsfläche
- 14: Vertiefung
- 15: Ausprägung
- 16: Spalt
- 17: Drehmomentübertragungselement
- 18: Drehmomentübertragungsfläche

## Patentansprüche

1. Scherenzahnrad (1) mit einem Drehmomente übertragenden Hauptzahnrad (2) und einem in einer Grundstellung gegenüber dem Hauptzahnrad (2) in Umfangsrichtung versetzten und an dem Hauptzahnrad (2) in Umfangsrichtung über Federelemente (8) aus Polymerwerkstoff (9) elastisch abgestützten Hilfszahnrad (4), wobei die Federelemente (8) bei einer Relativverdrehung des Hilfszahnrads (4) gegenüber dem Hauptzahnrad (2) aus seiner versetzten Grundstellung um eine gemeinsame Drehachse (5) der beiden Zahnräder (2, 4) auf Schub beansprucht werden, und wobei die Federelemente (8) zwischen dem Hauptzahnrad (2) und dem Hilfszahnrad (4) in Richtung der gemeinsamen Drehachse (5) auf Druck vorgespannt sind, **dadurch gekennzeichnet, dass** die Federelemente (8) durch einen Ring (12) aus Polymerwerkstoff (9) miteinander verbunden sind.

2. Scherenzahnrad nach Anspruch 1, **dadurch gekennzeichnet, dass** das Hilfszahnrad (4) an einem starr mit dem Hauptzahnrad (2) verbundenen Lagerelement auf einer Seite in Richtung der gemeinsamen Drehachse (5) und radial dazu abgestützt ist.

3. Scherenzahnrad nach Anspruch 2, **dadurch gekennzeichnet, dass** das Lagerelement eine in das Hauptzahnrad (2) eingepresste Nabe (3) ist.

4. Scherenzahnrad nach mindestens einem der vorhergehenden Ansprüche, **dadurch gekennzeichnet, dass** die Federelemente (8) an eines der Zahnräder (2) fest angebunden und an dem anderen der Zahnräder (4) formschlüssig abgestützt sind.

5. Scherenzahnrad nach Anspruch 4, **dadurch gekennzeichnet, dass** die Federelemente (8) an das eine der Zahnräder (2) anvulkanisiert sind.

6. Scherenzahnrad nach mindestens einem der vorhergehenden Ansprüche 4 und 5, **dadurch gekennzeichnet, dass** der Ring (12) aus Polymerwerkstoff (9) an das eine Zahnrad (2) anvulkanisiert ist.

7. Scherenzahnrad nach mindestens einem der vorhergehenden Ansprüche 4 bis 6, **dadurch gekennzeichnet, dass** die Federelemente (8) an das Hauptzahnrad (2) anvulkanisiert sind und dass die freien Enden der Federelemente (8) formschlüssig aufnehmende Vertiefungen (14) in das Hilfszahnrad (4) eingeprägt sind.

8. Scherenzahnrad nach mindestens einem der vorhergehenden Ansprüche, **dadurch gekennzeichnet, dass** zwischen dem Hauptzahnrad (2) und dem Hilfszahnrad (4) eine reibungserhöhende Oberflächenbeschichtung wirksam ist.

9. Scherenzahnrad nach mindestens einem der vorhergehenden Ansprüche, **dadurch gekennzeichnet, dass** in Richtung der gemeinsamen Drehachse (5) einander gegenüber liegende Flächen am Außenumfang der Zahnräder (2, 4) voneinander beabstandet sind.

10. Scherenzahnrad nach mindestens einem der vorhergehenden Ansprüche, **dadurch gekennzeichnet, dass** die Federelemente (8) über ihre überwiegende Erstreckung längs der gemeinsamen Drehachse (5) frei liegen.

11. Scherenzahnrad nach mindestens einem der vorhergehenden Ansprüche, **dadurch gekennzeichnet, dass** der Polymerwerkstoff (9) der Federelemente (8) ölwarmfest ist.

12. Scherenzahnrad nach Anspruch 11, **dadurch gekennzeichnet, dass** der Polymerwerkstoff (9) der Federelemente (8) ein AEM- oder FPM-Kautschuk ist.

13. Scherenzahnrad nach mindestens einem der vorhergehenden Ansprüche, **dadurch gekennzeichnet, dass** den Federelemeten (8) aus Polymerwerkstoff (9) Metallfedern parallel geschaltet sind.

14. Scherenzahnrad nach Anspruch 13, **dadurch gekennzeichnet, dass** die Metallfedern zumindest teilweise in den Polymerwerkstoff (9) der Federelemente (8) eingebettet sind.
